# FASCICULE DE BREVET EUROPEEN

(11) **EP 1 433 045 B1**
(45) Date de publication et mention de la délivrance du brevet: **02.02.2005**
(21) Numéro de dépôt: 02800619.5
(22) Date de dépôt: 20.09.2002
(51) Int. Cl.: G06F 1/00

(54) **PROCEDE DE DETECTION GENERIQUE DE PROGRAMMES D'ATTAQUE CACHES DANS DES CHAINES DE DONNEES**
GENERISCHES VERFAHREN ZUM ERKENNEN VON IN DATENKETTEN VERBORGENEN ATTACKENPROGRAMMEN
GENERIC METHOD OF DETECTING ATTACK PROGRAMS HIDDEN IN DATA CHAINS

(30) Priorité: 05.10.2001 FR 0113063
(43) Date de publication de la demande: 30.06.2004
(73) Titulaire: FRANCE TELECOM SA, 75015 Paris (FR)
(72) Inventeur: DEBAR, Hervé, 14111 Louvigny (FR); ASSING, Dominique, 92400 Courbevoie (FR); MORIN, Benjamin, 14000 Caen (FR)
(74) Mandataire: Maillet, Alain
(86) Numéro de dépôt international: PCT/FR2002/003217
(87) Numéro de publication internationale: WO 2003/032134

(56) Documents cités:
- WO-A-98/45778
- US-A- 5 319 776
- US-A- 5 951 698
- F.SKULASON: "FOR PROGRAMMERS" VIRUS BULLETIN, novembre 1990 (1990-11), pages 13-16, XP002231410

## Description

La présente invention concerne un procédé de traitement de données d'entrée d'un système informatique, incluant au moins une étape de détection d'un mot spécifique présent parmi lesdites données.

De tels procédés sont couramment utilisés pour détecter des programmes d'attaque venant de l'extérieur du système informatique, visant à perturber le fonctionnement du système en lui faisant exécuter des actions non-autorisées élaborées par un attaquant du système. Ces attaques peuvent donc nuire à l'intégrité, à la disponibilité, et à la confidentialité d'un système informatique. Elles créent des préjudices considérables, et affectent tant les administrations que les entreprises privées, et donc l'ensemble de la société moderne. Il est donc souhaitable de munir les systèmes informatiques de moyens leur permettant de détecter de manière fiable et systématique de telles attaques.

L'invention est liée aux considérations suivantes :
La plupart des attaques identifiées tirent parti de failles présentes dans les systèmes auxquels ces attaques sont destinées. Les attaques les plus couramment observées utilisent un principe connu sous l'appellation "débordement de pile". Ces attaques utilisent une propriété de certains systèmes informatiques, selon laquelle, lorsqu'une longueur d'un flot d'informations destiné à une zone mémoire de longueur prédéfinie excède ladite longueur prédéfinie, le ou les mots qui ne peuvent alors être stockés dans la zone mémoire faute d'espace mémoire disponible, et qui "dépassent" donc de ladite zone mémoire, sont considérés par une unité centrale de traitement incluse dans le système comme des instructions immédiatement exécutables, et sont alors exécutées sans qu'aucune vérification de leur légitimité ne soit opérée par le système de traitement. De telles instructions peuvent ainsi déclencher un appel à un programme stocké par l'attaquant, soit préalablement n'importe où dans l'espace mémoire, soit simultanément dans la zone mémoire que l'attaquant aura choisi de faire déborder.
Dans l'état actuel de la technique, deux méthodes sont utilisées pour détecter des attaques par débordement de pile.
Une première méthode de détection identifie des chaînes de données de longueur très importante, car un grand nombre de données est généralement nécessaire pour faire déborder la zone mémoire visée. Cette première méthode ne donne pas entière satisfaction, et sera de moins en moins efficace à mesure qu'apparaîtront des outils informatiques de plus en plus complexes, nécessitant dans le cours de leur fonctionnement normal des échanges de chaînes de données de longueur sans cesse croissante. Il sera ainsi de plus en plus difficile de différencier une chaîne de données de longueur importante, mais inoffensive, d'une chaîne de données pernicieuse de longueur comparable.
Une deuxième méthode de détection recherche des chaînes de données contenant un grand nombre d'instructions d'un type connu en langage Assembleur sous le vocable NOP, qui sont en elles-mêmes inoffensives puisqu'elles ordonnent à l'unité centrale de ne rien faire, mais dont une accumulation peut être utilisée pour faire déborder la zone mémoire visée. Cette deuxième méthode de détection, plus pointue que la première, est également destinée à perdre de son efficacité à mesure qu'apparaîssent de nouvelles manières d'encoder des instructions du type NOP. Dans l'état actuel de la technique, cinquante-trois façons différentes de réaliser des instructions du type NOP ont été répertoriées après analyse d'attaques connues. Le nombre de combinaisons offertes pour camoufler des chaînes d'instructions de type NOP est donc très important et dépasse les capacités de détection de la plupart des systèmes de traitement de données courants.

le document US-A-5 319 776 décrit un procédé selon le préambule de la revendication independante 1. La présente invention a pour but de remédier dans une large mesure à ces inconvénients en proposant un procédé de traitement de données qui permet une détection générique de programmes d'attaque inclus dans des chaînes de données d'entrée d'un système informatique, ladite détection étant effectuée indépendamment de la longueur desdites chaînes de données et de la présence d'instructions de type NOP dans lesdites chaînes.

En effet, selon l'invention telle que définie dans la revendication indépendante 1, un procédé de traitement de données conforme au paragraphe introductif est caractérisé en ce que le mot spécifique à détecter représente une instruction nécessaire à une exécution d'un programme présent parmi lesdites données.

Les travaux des inventeurs ont fait apparaître que tout programme d'attaque doit inclure, en vue de son exécution, un ou plusieurs caractères particuliers, générés par des instructions représentées par des mots spécifiques présents dans les données d'entrée. De telles instructions spécifiques peuvent alors trahir la présence d'un programme d'attaque dans une chaîne de données en apparence inoffensive. Un caractère nul est un exemple d'un tel caractère particulier, constitué par un mot de valeur nulle destiné à signaler la fin d'une chaîne de caractères. La présence d'un caractère nul, tel quel, dans une chaîne de données incluant un programme d'attaque sera intérprétée par le système recevant cette chaîne de données comme une interruption de ladite chaîne et empêchera l'exécution du programme d'attaque.

C'est donc un nouveau critère de suspicion qu'ont identifié les inventeurs, en concevant un procédé qui vise à rechercher dans une chaîne de données d'entrée non plus des moyens pour faire déborder une zone mémoire, mais des moyens nécessaires à l'exécution d'un programme d'attaque qui serait caché dans ladite chaîne de données et sont ainsi révélateurs de la présence dudit programme. Ce principe de détection peut être utilisé de façon générique pour détecter d'autres attaques que des attaques à débordement de pile.

Ainsi qu'exposé ci-desssus, un caractère nul, en tant que signe de ponctuation signifiant une fin de chaîne de caractères, et devant donc être généré par un programme d'attaque, nécessite la présence d'une instruction particulière à cet effet, ladite instruction pouvant alors trahir la présence d'un programme d'attaque dans une chaîne de données en apparence inoffensive. Une façon de générer un tel caractère est de réaliser un OU-EXCLUSIF entre des valeurs binaires identiques.

Dans un mode de mise en oeuvre particulier de l'invention, le mot spécifique à détecter représentera donc une instruction du type OU-EXCLUSIF entre le contenu d'un registre et le même contenu dudit registre.

Les données d'entrée d'un système informatique peuvent se présenter sous différents formats. En particulier, elles peuvent être encodées selon un format de type ASCII, et être alors difficilement manipulables.

Selon une variante de l'invention, un procédé tel que décrit ci-dessus inclut en outre, en préalable à l'étape de détection, une étape de transcription des données d'entrée en code hexadécimal.

Dans le format hexadécimal, des mots, caractères ou instructions cachés dans une chaîne de données d'entrée seront plus facilement détectables qu'en format ASCII.

Le procédé selon l'invention peut être utilisé soit pour réaliser une détection préventive d'attaques, c'est-à-dire pour signaler à l'unité centrale de traitement la présence d'un mot suspect potentiellement révélateur de la présence d'un programme d'attaque caché au sein d'une chaîne de données d'entrée, avant traitement de ladite chaîne de données par ladite unité centrale, soit pour établir un diagnostic postérieur à une attaque, auquel cas il sera souhaitable de pouvoir analyser rétrospectivement les circonstances dans lesquelles l'attaque s'est produite.

Un procédé tel que décrit plus haut contiendra donc avantageusement, en préalable à l'étape de détection, une étape de mémorisation des données d'entrée dans un journal d'entrée.

Lorsqu'un mot spécifique a été détecté, et qu'en conséquence une chaîne de données incluant ledit mot spécifique a été identifiée comme étant suspecte, une telle suspicion pourra être corroborée par la présence dans ladite chaîne de données suspecte d'autres instructions qui sont souvent utilisées par des programmes d'attaque, par exemple des instructions de type "saut", "interruption" ou "appel système".

A cet effet, un procédé tel que décrit plus haut inclut de plus une étape de recherche, dans une zone du journal d'entrée qui inclut une instruction détectée au cours de l'étape de détection, d'instructions d'au moins un type connu pour être utilisé par des virus informatiques existants.

Ainsi qu'exposé précédemment, un attaquant du système vise, dans une attaque à débordement de pile, à faire déborder une zone mémoire dont il connaît la longueur prédéfinie. Si de telles zones mémoire existent dans la plupart des systèmes informatiques, elles sont en nombre limité et difficiles à trouver, de sorte que les attaquants cherchent souvent à exploiter des failles qu'ils connaissent déjà pour les avoir identifié et utilisé avec succès par le passé, et se servent à plusieurs reprises, avec des attaques de morphologies différentes, d'une même adresse de début de zone mémoire comme cible d'attaque. L'adresse ainsi employée constitue donc souvent une signature de l'attaquant, qu'il peut être avantageux de répertorier, à des fins de prévention et/ou de diagnostic.

Dans ce but, un procédé tel que décrit plus haut inclut de plus une étape de recherche, dans une zone du journal d'entrée qui inclut une instruction détectée au cours de l'étape de détection, d'au moins une valeur d'adresse mémoire connue pour être utilisée par des virus informatiques existants.

Dans l'un de ses modes d'implémentation possibles, l'invention concerne également un logiciel apte à mettre en oeuvre un procédé tel que décrit plus haut, lequel logiciel pourra être chargé depuis un support de données dans une mémoire incluse dans le système informatique, en vue d'être exécuté par une unité centrale de traitement incluse dans ledit système.

Dans l'un de ses multiples modes de commercialisation, l'invention concerne également un support de données contenant sous forme encodée un logiciel tel que décrit ci-dessus. Un tel support de données pourra par exemple être constitué par une bande ou un disque magnétique, un disque magnéto-optique ou encore un disque optique de type CD ou DVD.

Dans l'un de ses modes de mise en oeuvre, l'invention telle que définie dans la revendication indépendante 9, concerne un système de traitement de données incluant :
. un port d'entrée destiné à recevoir des données d'entrée du système,
. une unité centrale de traitement,
. une mémoire, et
. des moyens de détection aptes à détecter au moins un mot spécifique, présent dans les données d'entrée, ledit mot spécifique étant représentatif d'une instruction nécessaire à une exécution d'un programme présent parmi lesdites données et exécutable par l'unité centrale de traitement.

Dans un mode de réalisation particulier d'un tel système, le mot spécifique à détecter est représentatif d'une instruction du type OU-EXCLUSIF entre le contenu d'un registre inclus dans la mémoire et le même contenu dudit registre.

Dans l'une de ses variantes, un tel système inclut de plus des moyens pour mémoriser les données d'entrée du système dans un journal d'entrée, en vue d'une analyse desdites données par les moyens de détection.

Ainsi qu'exposé plus haut, un système selon cette variante contiendra avantageusement des moyens de recherche destinés à identifier, à des fins de confirmation et/ou de diagnostic, des instructions d'au moins un type connu pour être utilisé par des virus informatiques existants et/ou au moins une valeur d'adresse mémoire connue pour être utilisée par des virus informatiques existants.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig.1 est un schéma fonctionnel décrivant un système de traitement de données selon un mode de mise en oeuvre de l'invention,
la Fig.2 est un schéma représentant une portion de chaîne de données incluant un programme d'attaque, et
la Fig.3 est un organigramme décrivant un procédé de traitement de données mis en oeuvre dans un tel système.

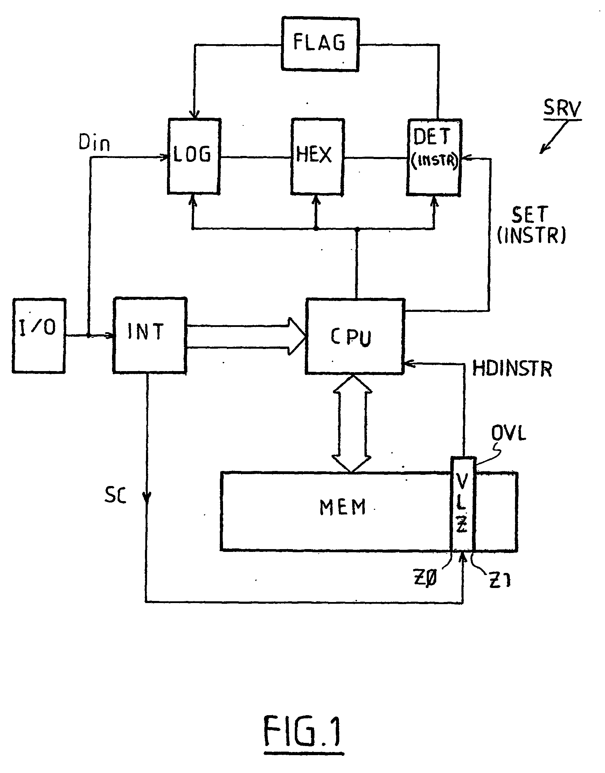

La Fig.1 représente un système de traitement de données SRV, par exemple un serveur formant partie d'un réseau de télécommunication, lequel système inclut :
. un port d'entrée I/O destiné à recevoir des données d'entrée Din du système SRV,
. une unité centrale de traitement CPU, et
. une mémoire MEM.

De tels systèmes sont vulnérables à des programmes d'attaque, notamment à débordement de pile, qui sont généralement dissimulées dans les chaînes de données d'entrée Din. Ces chaînes de données Din, qui peuvent par exemple se présenter sous un format de type ASCII, sont traduites en langage assembleur par une interface INT. Lorsqu'un programme d'attaque SC à débordement de pile est présent dans une chaîne de données d'entrée, ce programme vise à remplir une zone mémoire VLZ vulnérable, car ayant des adresses de début et de fin Z0 et Z1 prédéfinies et connues d'un attaquant concepteur du programme d'attaque, au moyen d'un flux de données ayant une longueur excédant la longueur [Z0 ; Z1] de la zone mémoire vulnérable VLZ.

Le ou les premiers mots qui ne peuvent alors être stockés dans la zone mémoire VLZ faute d'espace mémoire disponible, représentés ici sous la forme d'un dépassement OVL, seront considérés par l'unité centrale de traitement CPU comme une instruction HDINSTR immédiatement exécutable, et seront alors exécutées sans qu'aucune vérification de leur légitimité ne soit opérée par le système SRV. Une telle instruction HDINSTR peut par exemple déclencher un appel à un programme qui peut avoir été stocké préalablement par l'attaquant n'importe où dans l'espace mémoire MEM, ou simultanément dans la zone mémoire VLZ que l'attaquant aura choisi de faire déborder.

Dans le but de détecter de telles attaques, le système de traitement de données SRV représenté ici inclut des moyens de détection DET(INSTR) aptes à détecter au moins un mot spécifique, présent dans les données d'entrée Din, ledit mot spécifique étant représentatif d'une instruction nécessaire à une exécution d'un programme présent parmi lesdites données Din et exécutable par l'unité centrale de traitement CPU.

La nature de l'instruction INSTR, dont le mot spécifique à détecter est représentatif, est déterminée par l'unité centrale de traitement CPU au moyen d'un signal SET(INSTR) envoyé par ladite unité centrale CPU au moyens de détection DET(INSTR). En effet, les moyens de détection DET(INSTR) inclus dans ce mode de mise en oeuvre particulier de l'invention sont capables de détecter plusieurs mots spécifiques différents.

Le système de traitement SRV décrit ici inclut en outre des moyens pour mémoriser les données d'entrée du système dans un journal d'entrée LOG, en vue d'une analyse desdites données par les moyens de détection DET. Les données d'entrée Din sont ainsi mémorisées dans le journal LOG, sous contrôle de l'unité centrale CPU, qui fournit notamment audit journal LOG des informations d'horloge en vue d'un enregistrement par ordre chronologique desdites données Din. Ces données étant en principe au format ASCII, le système de traitement SERV comprend en outre des moyens de transcription HEX, aptes à traduire, sous contrôle de l'unité centrale CPU, lesdites données Din en un format plus facilement intelligible, comme par exemple en code hexadécimal permettant une identification plus facile d'instructions en langage Assembleur.

Par ailleurs, ce système de traitement SRV inclut des moyens de signalisation FLAG, qui permettent d'inscrire dans le journal LOG les résultats des opérations de détection menées par les moyens de détection DET(INSTR). Ainsi, à chaque chaîne de données Din seront associées des informations quant à son contenu, et chaque chaîne de données contenant un mot spécifique identifié par les moyens de détection DET(INSTR) comme potentiellement révélateur de la présence d'un programme d'attaque sera signalée comme telle, ce qui facilitera d'ultérieures opérations de diagnostic.

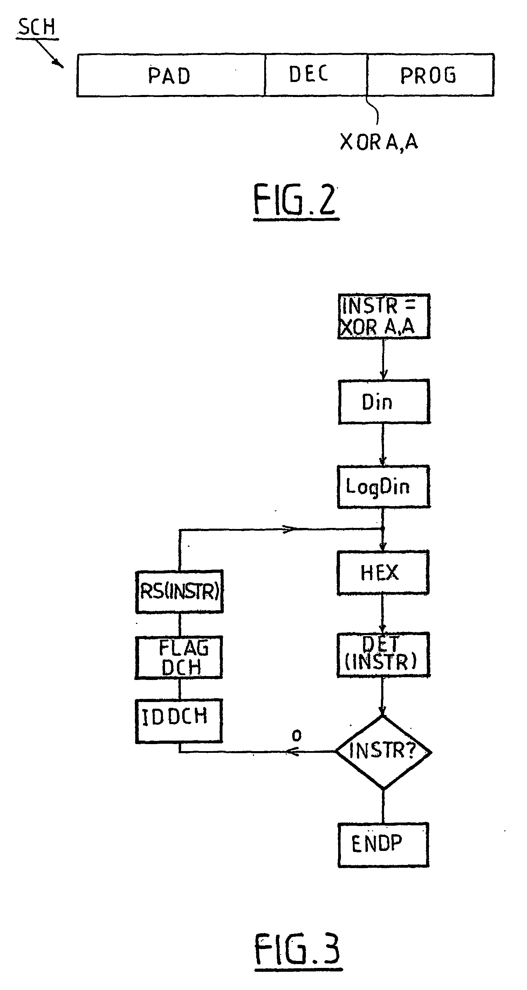

La Fig.2 représente schématiquement la structure que peut présenter un programme d'attaque à débordement de pile SCH présent dans une chaîne de données d'entrée. Une telle représentation est le fruit des travaux des inventeurs et permet de mieux comprendre la différence de principe qui existe entre le procédé de détection mis au point par eux et les méthodes de détection de programmes d'attaque connues. Selon cette représentation, un programme d'attaque à débordement de pile SCH inclut une première partie PAD, dite de remplissage, qui contient le plus souvent un grand nombre d'instructions de type NOP, qui peuvent avoir été encodées sous différentes formes par l'attaquant afin de les rendre méconnaissables et donc indétectables. Le volume représenté par cette partie de remplissage PAD doit être égale à la longueur de la zone mémoire vulnérable visée par le programme, de manière à remplir cette zone mémoire jusqu'à la faire déborder. Le programme d'attaque SCH contient une deuxième partie DEC, qui est donc destinée à dépasser de la zone mémoire visée par l'attaque et sera alors considérée comme un programme immédiatement exécutable par l'unité centrale de traitement du système visée. Ce programme immédiatement exécutable peut être en lui-même constitué d'une série d'instructions destinée à produire l'effet néfaste de l'attaque, ou, dans le cas d'un programme d'attaque polymorphe, constituer un décodeur destiné à décoder une série d'informations présentes dans une troisième partie PROG du programme d'attaque SCH, laquelle troisième partie contient sous forme encodée une série instructions destinée à produire l'effet néfaste et sont destinée à être décodée par le décodeur inclus dans la deuxième partie DEC. Un tel encodage rend encore plus difficile la détection du programme d'attaque SCH par les méthodes de détection connues. La troisième partie PROG contiendra en outre des adresses d'appel et de renvoi dont l'identification, rendue possible grâce à l'invention, peut s'avérer utile pour établir des diagnostics quant à la nature de l'attaque et à l'identité de l'attaquant.

En tout état de cause, les deuxième et troisième parties DEC et PROG du programme d'attaque SCH doivent être séparées l'une de l'autre par au moins un caractère nul qui signale la fin du programme PROG. Or, un tel caractère nul, s'il est apparent tel quel dans la chaîne de données Din qui inclut le programme d'attaque SCH, sera interprété comme un élément de ponctuation d'une chaîne de caractères et interrompra le déroulement du programme d'attaque SCH.

Les inventeurs ont conclu qu'un programme d'attaque SCH doit contenir en lieu et place d'un tel caractère nul un mot spécifique représentatif d'une instruction XOR A,A qui, en effectuant une opération du type OU-EXCLUSIF entre le contenu d'un registre A et le même contenu dudit registre A, produira un mot de valeur nulle lors de l'exécution du programme d'attaque SCH et signalera par ce caractère particulier la fin de la chaîne d'instructions contenue dans la deuxième partie DEC dudit programme SCH.

L'invention vise à détecter de tels caractères particuliers, qui sont indicatifs de la présence d'un programme d'attaque au sein d'une chaîne de données d'entrée d'un système de traitement de données, et ce quelle que soit la nature de l'attaque elle-même, alors que les méthodes de détection connues visent principalement à détecter des chaînes semblables à la partie de remplissage PAD.

La Fig.3 illustre sous forme d'un organigramme un mode de mise en oeuvre possible de l'invention, au sein d'un procédé de traitement de données destiné à détecter la présence d'un programme d'attaque caché au sein d'une chaîne de données. Dans une étape initiale INSTR=XOR A,A de ce procédé, l'unité centrale de traitement informe les moyens de détection que le mot spécifique à détecter doit être représentatif d'une instruction du type OU-EXCLUSIF entre le contenu d'un registre A et le même contenu dudit registre A, pour reprendre l'exemple évoqué plus haut. Dans une étape suivante Din, une chaîne de données d'entrée est reçue par le système via son port d'entrée. Dans une étape suivante LogDin, ces données d'entrée sont mémorisées dans un journal d'entrée. Dans une étape suivante HEX, les données mémorisées dans ledit journal d'entrée, qui peuvent par exemple être dans un format de type ASCII, sont transcrites en code hexadécimal. Dans une étape suivante DET(INSTR), les données ainsi transcrites sont passées en revue par les moyens de détection qui recherchent au sein de ces données un mot spécifique représentatif de l'instruction INSTR, c'est-à-dire à ce stade d'une instruction du type XOR A,A. Si aucune instruction de ce type n'est trouvée, le procédé s'achève et aucune mention particulière n'est faite dans le journal d'entrée en correspondance avec la chaîne de données d'entrée Din.

Si, par contre, les moyens de détection détectent parmi les données d'entrée Din un mot spécifique représentatif d'une instruction du type XOR A,A, une portion de la chaîne de données DCH correspondante est identifiée au cours d'une étape IDDCH et une mention signalant la présence d'une instruction suspecte et potentiellement révélatrice d'un programme d'attaque est faite, au cours d'une étape FLAGDCH, dans ledit journal en correspondance avec la portion DCH identifiée. En vue de corroborer ces soupçons, l'unité centrale de traitement peut changer la nature de l'instruction dont le mot spécifique à détecter est représentatif au cours d'une étape suivante RS(INSTR), de manière à faire opérer une recherche, dans la zone du journal d'entrée qui inclut la portion de la chaîne de données DCH précédemment identifiée, d'instructions INSTR d'au moins un type connu pour être utilisé par des virus informatiques existants, par exemple des instructions de type "saut", "interruption" ou "appel système". De telles recherches sont alors menées au cours des étapes HEX et DET(INSTR) déjà décrites, les résultats desdites recherches, s'ils sont positifs, étant à leur tour consignés dans le journal d'entrée au cours des étapes IDDCH et FLAGDCH déjà décrites.

L'unité centrale pourra en outre faire opérer, au moyen de l'étape RS(INSTR), une recherche d'une valeur d'adresse mémoire connue pour être utilisée par des virus informatiques existants, au lieu d'ordonner la recherche d'une autre instruction.

De telles adresses présentent un intérêt particulier en ce qu'elles constituent souvent une sorte de signature de l'attaquant, et permettent ainsi d'accélérer l'établissement d'un diagnostic relatif aux effets néfastes que l'attaque détectée est destinée par son concepteur à provoquer, diagnostic qui sera rendu possible grâce à l'invention par un examen du journal d'entrée.

## Revendications

1. Procédé de traitement de données d'entrée d'un système informatique, incluant au moins une étape de détection d'un mot spécifique présent parmi lesdites données,
procédé **caractérisé en ce que** le mot spécifique à détecter représente une instruction destinée à générer une valeur numérique particulière nécessaire à une exécution d'un programme présent parmi lesdites données.

2. Procédé de traitement de données selon la revendication 1, **caractérisé en ce que** le mot spécifique à détecter représente une instruction du type OU-EXCLUSIF entre le contenu d'un registre et le même contenu dudit registre.

3. Procédé de traitement de données selon la revendication 1, **caractérisé en ce qu'**il inclut en outre, en préalable à l'étape de détection, une étape de transcription des données d'entrée en code hexadécimal.

4. Procédé de traitement de données selon la revendication 1, **caractérisé en ce qu'**il inclut en outre, en préalable à l'étape de détection, une étape de mémorisation des données d'entrée dans un journal d'entrée.

5. Procédé de traitement de données selon la revendication 4, **caractérisé en ce qu'**il inclut de plus une étape de recherche, dans une zone du journal d'entrée qui inclut une instruction détectée au cours de l'étape de détection, d'instructions d'au moins un type connu pour être utilisé par des virus informatiques existants.

6. Procédé de traitement de données selon la revendication 4, **caractérisé en ce qu'**il inclut de plus une étape de recherche, dans une zone du journal d'entrée qui inclut une instruction détectée au cours de l'étape de détection, d'au moins une valeur d'adresse mémoire connue pour être utilisée par des virus informatiques existants.

7. Logiciel apte à mettre en oeuvre toutes les étapes du procédé conforme à l'une des revendications 1 à 6.

8. Support de données contenant sous forme encodée un logiciel selon la revendication 7.

9. Système de traitement de données incluant :
. un port d'entrée destiné à recevoir des données d'entrée du système,
. une unité centrale de traitement,
. une mémoire, et
. des moyens de détection aptes à détecter au moins un mot spécifique, présent dans les données d'entrée, ledit mot spécifique étant représentatif d'une instruction destinée à générer une valeur numérique particulière nécessaire à une exécution d'un programme présent parmi lesdites données et exécutable par l'unité centrale de traitement.

10. Système de traitement de données selon la revendication 9, **caractérisé en ce que** le mot spécifique à détecter est représentatif d'une instruction du type OU-EXCLUSIF entre le contenu d'un registre inclus dans la mémoire et le même contenu dudit registre.

11. Système de traitement de données selon la revendication 9, **caractérisé en ce qu'**il inclut de plus des moyens pour mémoriser les données d'entrée du système dans un journal d'entrée, en vue d'une analyse desdites données par les moyens de détection.

12. Système de traitement de données selon la revendication 9, **caractérisé en ce qu'**il inclut de plus des moyens de recherche destinés à identifier, dans une zone du journal d'entrée qui inclut une instruction détectée par les moyens de détection, des instructions d'au moins un type connu pour être utilisé par des virus informatiques existants.

13. Système de traitement de données selon la revendication 9, **caractérisé en ce qu'**il inclut de plus des moyens de recherche destinés à identifier, dans une zone du journal d'entrée qui inclut une instruction détectée par les moyens de détection, au moins une valeur d'adresse mémoire connue pour être utilisée par des virus informatiques existants.

## Claims

1. Method for processing computer system input data, including at least one step involving the detection of a specific word present within the said data, a method **characterised in that** the specific word to be detected represents an instruction intended to generate a particular numerical value needed for an execution of a program present within the said data.

2. Method for processing data according to Claim 1, **characterised in that** the specific word to be detected represents an instruction of the OR-EXCLUSIVE type between the content of a register and the same content of the said register.

3. Method for processing data according to Claim 1, **characterised in that** it also includes, prior to the detection step, a step for transcribing the input data into hexadecimal code.

4. Method for processing data according to Claim 1, **characterised in that** it also includes, prior to the detection step, a step for storing the input data in an input log.

5. Method for processing data according to Claim 4, **characterised in that** it also includes a step to search, in a zone of the input log which includes an instruction detected during the detection step, for instructions of at least one type known to be used by existing computer viruses.

6. Method for processing data according to Claim 4, **characterised in that** it also includes a step to search, in a zone of the input log which includes an instruction detected during the detection step, for at least one store address value known to be used by existing computer viruses.

7. Software capable of implementing all the steps in the method according to one of Claims 1 to 6.

8. Data medium containing software according to Claim 7 in encoded form.

9. Data processing system including:
- an input port intended to accept system input data,
- a central processing unit,
- a store, and
- detection means capable of detecting at least one specific word present in the input data, the said specific word being representative of an instruction intended to generate a particular numerical value needed for an execution of a program present within the said data and executable by a central processing unit.

10. Data processing system according to Claim 9, **characterised in that** the specific word to be detected is representative of an instruction of the OR-EXCLUSIVE type between the content of a register included in the store and the same content of the said register.

11. Data processing system according to Claim 9, **characterised in that** it also includes means for storing the system input data in an input log with a view to analysing the said data using the means of detection.

12. Data processing system according to Claim 9, **characterised in that** it also includes search means intended to identify, in a zone in the input log which includes an instruction detected by the detection means, instructions of at least one type known to be used by existing computer viruses.

13. Data processing system according to Claim 9, **characterised in that** it also includes search means intended to identify, in a zone in the input log which includes an instruction detected by the detection means, at least one store address value known to be used by existing computer viruses.

## Patentansprüche

1. Verfahren zum Verarbeiten von Eingangsdaten eines EDV-Systems, das mindestens einen Schritt des Erfassens eines spezifischen Worts umfasst, das unter den Daten präsent ist,
**dadurch gekennzeichnet, dass** das spezifische zu erfassende Wort eine Anweisung umfasst, die dazu bestimmt ist, einen bestimmten Zahlenwert zu erzeugen, der für die Ausführung eines Programms, das unter den Daten präsent ist, erforderlich ist.

2. Verfahren zum Verarbeiten von Daten nach Anspruch 1, **dadurch gekennzeichnet, dass** das spezifische zu erfassende Wort eine Anweisung des Typs ODER-EXKLUSIV zwischen dem Inhalt eines Registers und dem gleichen Inhalt des Registers darstellt.

3. Verfahren zum Verarbeiten von Daten nach Anspruch 1, **dadurch gekennzeichnet, dass** es ferner vor dem Schritt des Erfassens einen Schritt der Transkription der Eingangsdaten in Hexadezimalcode umfasst.

4. Verfahren zum Verarbeiten von Daten nach Anspruch 1, **dadurch gekennzeichnet, dass** es ferner vor dem Schritt des Erfassens einen Schritt des Speicherns der Eingangsdaten in ein Eingangsprotokoll umfasst.

5. Verfahren zum Verarbeiten von Daten nach Anspruch 4, **dadurch gekennzeichnet, dass** es ferner einen Schritt des Suchens von Anweisungen mindestens eines Typs, der dafür bekannt ist, dass er von existierenden EDV-Viren verwendet wird, in einer Zone des Eingangsprotokolls umfasst, die eine Anweisung, die im Laufe des Erfassungsschritts erfasst wird, enthält.

6. Verfahren zum Verarbeiten von Daten nach Anspruch 4, **dadurch gekennzeichnet, dass** es ferner einen Schritt des Suchens mindestens eines bekannten Speicheradresswerts, der dafür bekannt ist, dass er von existierenden EDV-Viren verwendet wird, in einer Zone des Eingangsprotokolls umfasst, die eine Anweisung enthält, die im Laufe des Detektionsschritts erfasst wird.

7. Software, die alle Schritte eines Verfahrens nach einem der Ansprüche 1 bis 6 anwenden kann.

8. Datenträger, der in verschlüsselter Form eine Software nach Anspruch 7 enthält.

9. System zum Verarbeiten von Daten umfassend:
• eine Eingangsschnittstelle, die dazu bestimmt ist, Eingangsdaten des Systems zu empfangen,
• eine Zentralverarbeitungseinheit,
• einen Speicher und
• Mittel zum Erfassen, die mindestens ein spezifisches Wort erfassen können, das in den Eingangsdaten präsent ist, wobei das spezifische Wort für eine Anweisung repräsentativ ist, die dazu bestimmt ist, einen bestimmten Zahlenwert zu erzeugen, der für eine Ausführung eines Programms erforderlich ist, das in den Daten präsent ist und von der Zentralverarbeitungseinheit ausgeführt werden kann.

10. System zum Verarbeiten von Daten nach Anspruch 9, **dadurch gekennzeichnet, dass** das spezifische zu erfassende Wort für eine Anweisung des Typs ODER-EXKLUSIV zwischen dem Inhalt eines Registers, das in dem Speicher enthalten ist, und dem gleichen Inhalt des Registers repräsentativ ist.

11. System zum Verarbeiten von Daten nach Anspruch 9, **dadurch gekennzeichnet, dass** es ferner Mittel zum Speichern der Eingangsdaten des Systems in ein Eingangsprotokoll zur Analyse der Daten durch die Detektionsmittel umfasst.

12. System zum Verarbeiten von Daten nach Anspruch 9, **dadurch gekennzeichnet, dass** es ferner Suchmittel umfasst, die dazu bestimmt sind, in einer Zone des Eingangsprotokolls, die eine Anweisung umfasst, die von den Erfassungsmitteln erfasst wird, Anweisungen mindestens eines Typs zu identifizieren, der dafür bekannt ist, dass er von existierenden EDV-Viren verwendet wird.

13. System zum Verarbeiten von Daten nach Anspruch 9, **dadurch gekennzeichnet, dass** es ferner Suchmittel umfasst, die dazu bestimmt sind, in einer Zone des Eingangsprotokolls, die eine von den Erfassungsmitteln erfasste Anweisung umfasst, mindestens einen Speicheradresswert zu identifizieren, der dafür bekannt ist, dass er von existierenden EDV-Viren verwendet wird.
